# EUROPÄISCHE PATENTSCHRIFT

(11) **EP 3 026 785 B1**
(45) Veröffentlichungstag und Bekanntmachung des Hinweises auf die Patenterteilung: **27.03.2019**
(21) Anmeldenummer: 14194855.4
(22) Anmeldetag: 26.11.2014
(51) Int. Cl.: H02M 1/32, H02M 1/42, H02M 7/483, H02J 13/00, H02H 7/04, H02H 7/10, H02H 7/26

(54) **Elektrische Energieverteilanlage**
Electrical energy distributor
Installation de distribution d'énergie électrique

(43) Veröffentlichungstag der Anmeldung: 01.06.2016
(73) Patentinhaber: Siemens Aktiengesellschaft, 80333 München (DE)
(72) Erfinder: Arzig, Klaus, 90537 Feucht (DE)

(56) Entgegenhaltungen:
- DE-A1- 10 139 318
- DE-A1-102012 221 571
- FR-A1- 2 015 467
- US-A1- 2011 285 399
- US-A1- 2013 193 766
- US-A1- 2014 070 617

## Beschreibung

Die Erfindung bezieht sich auf eine elektrische Energieverteilanlage, ein Verfahren zu deren Betrieb sowie auf einen Spannungsniveauumsetzer zum Einsatz zwischen einem dreiphasigen Mittelspannungsnetz und einem dreiphasigen Niederspannungsnetz einer elektrischen Energieverteilanlage.

Bei elektrischen Energieverteilanlagen werden an der Schnittstelle zwischen einem Mittelspannungsnetz und einem Niederspannungsnetz heutzutage üblicherweise Mittelspannungstransformatoren (z. B. 10 kV oder 20 kV / 440 V) mit einem vorgeschalteten Schutzgerät auf der Mittelspannungsseite und einem zugehörigen Mittelspannungsschalter eingesetzt. Die Niederspannungsabzweige sind beispielsweise mit Leistungsschaltern, beispielsweise des Typs 3WL der Siemens AG, mit integriertem Überstromzeitschutz ausgestattet.

Aus der US 2013/0193766 A1 ist zudem ein Umrichter zur Verbindung eines AC-Netzes mit einem DC-Netz bekannt, der bei Fehlern im DC-Netz den Strom im DC-Netz absenkt.

Aus der DE 101 39 318 A1 ist ein Schutzverfahren für ein Streckenkabel einer Magnetschwebebahn bekannt, bei dem das Streckenkabel über einem Umrichter gespeist wird, der zur Geschwindigkeitsreduzierung der Magnetschwebebahn unterschiedliche Frequenzen einstellen kann.

Schließlich ist aus der US 2011/285399 A1 ein Verfahren zur Fehlererkennung im Pfad von Erdungselektroden von Hochspannungsgleichstromübertragungsleitungen bekannt.

Der Erfindung liegt die Aufgabe zugrunde, eine elektrische Energieverteilanlage anzugeben, die sich einfacher und damit kostengünstiger als bisherige vorbekannte Energieverteilanlagen realisieren lässt.

Diese Aufgabe wird erfindungsgemäß durch eine elektrische Energieverteilanlage mit den Merkmalen gemäß Patentanspruch 1 gelöst. Vorteilhafte Ausgestaltungen der erfindungsgemäßen Energieverteilanlage sind in Unteransprüchen angegeben.

Danach ist erfindungsgemäß vorgesehen, dass der Spannungsniveauumsetzer einen Umrichter zur Umsetzung des Spannungsniveaus sowie eine mit dem Umrichter in Verbindung stehende und diesen ansteuernde Steuereinrichtung umfasst, die im Falle eines Fehlers in einem von dem Umrichter gespeisten Niederspannungsnetz den Betrieb des Umrichters insgesamt oder zumindest den Energieeinspeisebetrieb in Richtung des Niederspannungsnetzes ganz oder zumindest kurzzeitig abschaltet, wobei die Steuereinrichtung bei Erkennen eines Kurzschlusses in einen Fehlerortungsmodus schaltet, in dem sie mit Hilfe des Umrichters den Ort des Kurzschlusses ermitteln kann, und wobei die Steuereinrichtung und der Fehlerortungsmodus derart ausgestaltet sind, dass im Fehlerortungsbetrieb die Steuereinrichtung den Umrichter derart ansteuert, dass dieser einen oder mehrere elektrische Impulse erzeugt und diese in das Niederspannungsnetz einspeist, die Steuereinrichtung an der Fehlerstelle reflektierte und zum Spannungsniveauumsetzer zurückgelaufene Impulse erfasst und die Steuereinrichtung anhand der zurückgelaufenen Impulse den Fehlerort ermittelt.

Ein wesentlicher Vorteil der erfindungsgemäßen Energieverteilanlage ist darin zu sehen, dass mit lediglich zwei Komponenten, nämlich dem zur Spannungsniveauumsetzung erfindungsgemäß vorgesehenen Umrichter und der dessen Arbeitsweise überwachenden Steuereinrichtung, die eingangs im Zusammenhang mit dem Stand der Technik genannten Komponenten, nämlich der Mittelspannungstransformator, der Transformatorschutz und die Leistungsschalter mit integriertem Überstromzeitschutz auf der Niederspannungsseite vollständig ersetzt werden können. Durch den Wegfall der letztgenannten Komponenten bzw. durch die Reduktion der im Zusammenhang mit der Spannungsniveauumsetzung erforderlichen Komponenten sinken Herstellungskosten, und das Ausfallrisiko der Energieverteilanlage wird reduziert.

Bezüglich der Fehlerortung ist es vorteilhaft, wenn die Steuereinrichtung im Fehlerortungsmodus den Umrichter derart ansteuert, dass dieser einen oder mehrere elektrische Impulse erzeugt und diese in das Niederspannungsnetz einspeist, an der Fehlerstelle reflektierte und zum Spannungsniveauumsetzer zurückgelaufene Impulse erfasst und anhand der zurückgelaufenen Impulse den Fehlerort ermittelt.

Vorzugsweise ermittelt die Steuereinrichtung den Fehlerort anhand der Laufzeit der vom Umrichter erzeugten Impulse zum Fehlerort und zurück.

Bei einer besonders bevorzugten Ausgestaltung ist vorgesehen, dass die Überwachung des Mittelspannungsnetzes mit der Überwachung des Niederspannungsnetzes verknüpft wird; in diesem Zusammenhang wird es als vorteilhaft angesehen, wenn mit dem Mittelspannungsnetz ein Mittelspannungsschutzgerät in Verbindung steht, das das Mittelspannungsnetz oder zumindest einen Teil davon überwacht, und das Mittelspannungsschutzgerät mit dem Spannungsniveauumsetzer über eine Kommunikationsverbindung verbunden ist.

Vorzugsweise ist das Mittelspannungsschutzgerät derart ausgestaltet, dass es im Falle eines Ausfalls der Kommunikation mit dem Spannungsniveauumsetzer den mit dem Spannungsniveauumsetzer in Verbindung stehenden Mittelspannungsnetzabschnitt ausschaltet.

Für den Fall, dass der Spannungsniveauumsetzer über die Kommunikationsverbindung seine Arbeitsfähigkeit signalisiert sowie außerdem die Abschaltung des von ihm gespeisten Niederspannungsnetzes anzeigt, ändert das Mittelspannungsschutzgerät vorzugsweise für seine Überwachung des Mittelspannungsnetzes (oder des Teils davon) seinen Überwachungsparametersatz und berücksichtigt mit einem neuen Überwachungsparametersatz, dass das abgeschaltete Niederspannungsnetz stromfrei ist.

Im fehlerfreien Normalbetrieb steuert die Steuereinrichtung den Umrichter vorzugsweise derart an, dass dieser den Phasenwinkel zwischen Strom und Spannung in dem von ihm gespeisten Niederspannungsnetz derart einstellt, dass eine Blindleistungskompensation erfolgt.

Mit Blick auf die Erzeugung so genannter erneuerbarer Energien wird es als vorteilhaft angesehen, wenn der Umrichter hinsichtlich der Richtung des Energieflusses bidirektional betreibbar ist und die Steuereinrichtung im fehlerfreien Normalbetrieb den Umrichter derart ansteuern kann, dass eine Energierückspeisung seitens des Niederspannungsnetzes in Richtung des Mittelspannungsnetzes erfolgen kann.

Die Erfindung bezieht sich darüber hinaus auf einen Spannungsniveauumsetzer zum Einsatz zwischen einem dreiphasigen Mittelspannungsnetz und einem dreiphasigen Niederspannungsnetz einer elektrischen Energieverteilanlage.

Bezüglich eines solchen Spannungsniveauumsetzers wird erfindungsgemäß vorgeschlagen, dass der Spannungsniveauumsetzer einen Umrichter zur Umsetzung des Spannungsniveaus sowie eine mit dem Umrichter in Verbindung stehende und diesen ansteuernde Steuereinrichtung umfasst, wobei die Steuereinrichtung derart ausgestaltet ist, dass sie im Falle eines Fehlers in dem von dem Umrichter gespeisten Niederspannungsnetz den Betrieb des Umrichters insgesamt oder zumindest den Energieeinspeisebetrieb in Richtung des Niederspannungsnetzes ganz oder zumindest kurzzeitig abschaltet, wobei die Steuereinrichtung bei Erkennen eines Kurzschlusses in einen Fehlerortungsmodus schaltet, in dem sie mit Hilfe des Umrichters den Ort des Kurzschlusses ermitteln kann, und wobei die Steuereinrichtung und der Fehlerortungsmodus derart ausgestaltet sind, dass im Fehlerortungsbetrieb die Steuereinrichtung den Umrichter derart ansteuert, dass dieser einen oder mehrere elektrische Impulse erzeugt und diese in das Niederspannungsnetz einspeist, die Steuereinrichtung an der Fehlerstelle reflektierte und zum Spannungsniveauumsetzer zurückgelaufene Impulse erfasst und die Steuereinrichtung anhand der zurückgelaufenen Impulse den Fehlerort ermittelt.

Bezüglich der Vorteile des erfindungsgemäßen Spannungsniveauumsetzers sei auf die obigen Ausführungen im Zusammenhang mit der erfindungsgemäßen Energieverteilanlage verwiesen.

Die Erfindung bezieht sich darüber hinaus auf ein Verfahren zum Betreiben einer elektrischen Energieverteilanlage, die ein dreiphasiges Mittelspannungsnetz und ein dreiphasiges Niederspannungsnetz umfasst.

Bezüglich eines solchen Verfahrens ist erfindungsgemäß vorgesehen, dass eine Spannungsniveauumsetzung zwischen dem Mittelspannungsnetz und dem Niederspannungsnetz mittels eines Umrichters erfolgt und im Falle eines Fehlers in dem von dem Umrichter gespeisten Niederspannungsnetz der Betrieb des Umrichters oder zumindest die Energieeinspeisung in Richtung des Niederspannungsnetzes ganz oder zumindest kurzzeitig abgeschaltet wird, wobei im Falle eines Fehlers eine Fehlerortung durchgeführt wird, indem der Umrichter derart angesteuert wird, dass dieser einen oder mehrere elektrische Impulse erzeugt und diese in das Niederspannungsnetz einspeist, an der Fehlerstelle reflektierte und zum Spannungsniveauumsetzer zurückgelaufene Impulse erfasst werden und anhand der zurückgelaufenen Impulse der Fehlerort ermittelt wird.

Bezüglich der Vorteile des erfindungsgemäßen Verfahrens sei auf die obigen Ausführungen im Zusammenhang mit der erfindungsgemäßen Energieverteilanlage verwiesen.

Die Erfindung wird nachfolgend anhand von Ausführungsbeispielen näher erläutert; dabei zeigen beispielhaft
- Figur 1: ein Ausführungsbeispiel für eine erfindungsgemäße elektrische Energieverteilanlage im Normalbetrieb,
- Figur 2: die elektrische Energieverteilanlage gemäß Figur 1 im Falle eines Ausfalls einer Kommunikationsverbindung, und
- Figur 3: die Arbeitsweise eines Spannungsniveauumsetzers der Energieverteilanlage gemäß Figur 1 im Falle eines Kurzschlusses im Bereich des Niederspannungsnetzes.

In den Figuren werden der Übersicht halber für identische oder vergleichbare Komponenten stets dieselben Bezugszeichen verwendet.

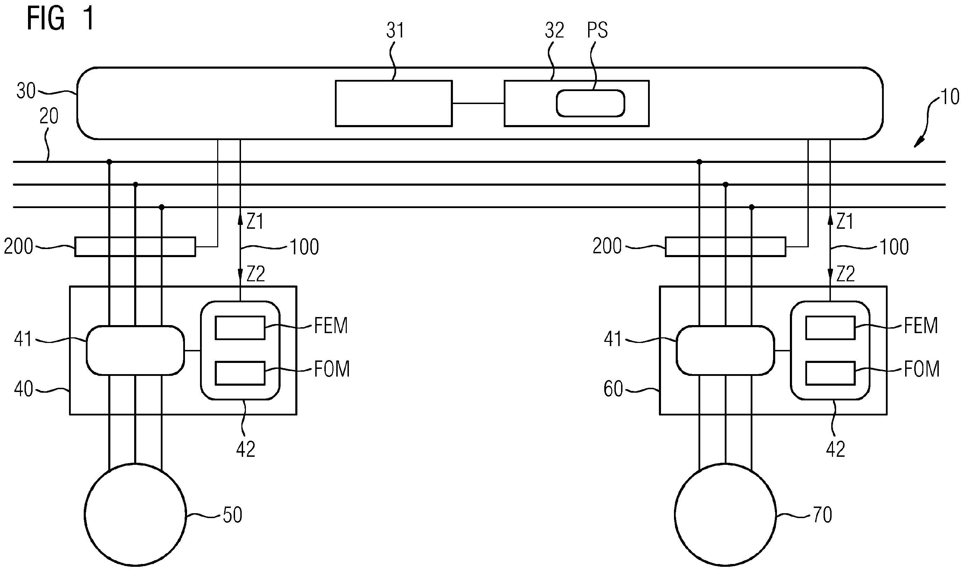

Die Figur 1 zeigt einen Abschnitt einer Energieverteilanlage 10, die unter anderem ein Mittelspannungsnetz 20 umfasst.

Die Arbeitsweise des Mittelspannungsnetzes 20 wird durch ein Mittelspannungsschutzgerät 30 überwacht, das eine Steuereinrichtung 31 und einen mit der Steuereinrichtung 31 in Verbindung stehenden Speicher 32 aufweist. In dem Speicher 32 ist ein Überwachungsparametersatz PS abgespeichert, anhand dessen die Steuereinrichtung 31 die Funktionstüchtigkeit des Mittelspannungsnetzes 20 überprüfen kann.

An das Mittelspannungsnetz 20 ist über eine Schalteinrichtung 200 ein Spannungsniveauumsetzer 40 angeschlossen, der das Mittelspannungsnetz 20 mit einem Niederspannungsnetz 50 verbindet. Der Spannungsniveauumsetzer 40 weist einen Umrichter 41 sowie eine den Umrichter 41 ansteuernde Steuereinrichtung 42 auf oder wird allein durch diese beiden Komponenten 41 und 42 gebildet. Bei dem Umrichter 41 handelt es sich vorzugsweise um einen Multilevelumrichter, beispielsweise einen solchen, wie er in der Druckschrift "An Innovative Modular Multilevel Converter Topology Suitable for Wide Power Range" (A. Lesnicar und R. Marquardt, 2003 IEEE Bologna Power Tech Conference, 23.-26. Juni 2003, Bologna, Italien) beschrieben worden ist.

Die Steuereinrichtung 42 ist mit einem Fehlererkennungsmodul FEM ausgestattet. Darüber hinaus weist die Steuereinrichtung 42 ein Fehlerortungsmodul FOM auf, das der Steuereinrichtung 42 einen Fehlerortungsmodus ermöglicht; in dem Fehlerortungsmodus kann die Steuereinrichtung 42 gemeinsam mit dem Umrichter 41 den Ort eines Kurzschlusses im Bereich des Niederspannungsnetzes 50 detektieren, wie weiter unten noch näher im Detail erläutert wird.

An das Mittelspannungsnetz 20 können darüber hinaus weitere Spannungsniveauumsetzer 60 angeschlossen sein, die jeweils eine Verbindung des Mittelspannungsnetzes 20 mit weiteren Niederspannungsnetzen 70 ermöglichen.

Die Figur 1 zeigt die Energieverteilanlage 10 in einem störungsfreien Zustand bzw. während eines fehlerfreien Normalbetriebs. Im fehlerfreien Normalbetrieb steuert die Steuereinrichtung 42 den Umrichter 41 des Spannungsniveauumsetzers 40 bevorzugt derart an, dass der Umrichter 41 den Phasenwinkel zwischen Strom und Spannung im Niederspannungsnetz 50 derart einstellt, dass eine vollständige oder zumindest bestmögliche Blindleistungskompensation im Niederspannungsnetz 50 erfolgt.

Darüber hinaus sind der Umrichter 41 und die Steuereinrichtung 42 vorzugsweise derart ausgestaltet, dass sie während des fehlerfreien Normalbetriebs einen Energiefluss auch bidirektional ermöglichen, also sowohl einen Energiefluss vom Mittelspannungsnetz 20 in Richtung des Niederspannungsnetzes 50 als auch in umgekehrter Richtung vom Niederspannungsnetz 50 in Richtung des Mittelspannungsnetzes 20; ein Energiefluss in umgekehrter Richtung kann beispielsweise gewünscht sein, wenn eine Energieerzeugung im Niederspannungsnetz 50 den Energieverbrauch im Niederspannungsnetz 50 übersteigt, zum Beispiel im Falle einer Erzeugung so genannter erneuerbarer Energie im Falle zu kleiner Nachfrage.

Das Mittelspannungsschutzgerät 30 steht über eine Kommunikationsverbindung 100 mit der Steuereinrichtung 42 des Spannungsniveauumsetzers 40 in Verbindung, so dass Zustandsdaten Z1 und Z2, die das Mittelspannungsnetz 20 und/oder das Niederspannungsnetz 50 betreffen, zwischen der Steuereinrichtung 31 des Mittelspannungsschutzgeräts 30 und der Steuereinrichtung 42 des Spannungsniveauumsetzers 40 ausgetauscht werden können.

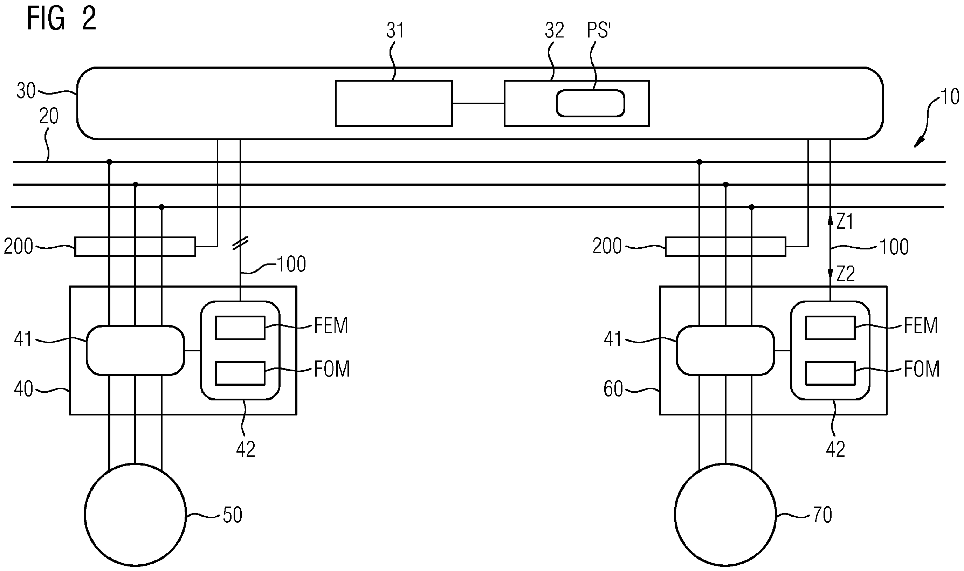

Die Figur 2 zeigt die Energieverteilanlage 10 im Falle einer Störung, und zwar konkret im Falle eines Ausfalls der Kommunikationsverbindung 100 zwischen der Steuereinrichtung 31 des Mittelspannungsschutzgeräts 30 und der Steuereinrichtung 42 des Spannungsniveauumsetzers 40.

Stellt die Steuereinrichtung 31 fest, dass die Kommunikationsverbindung 100 zu der Steuereinrichtung 42 unterbrochen ist oder aber dass die Arbeitsweise der Steuereinrichtung 42 offensichtlich fehlerhaft ist, so schaltet sie die Schalteinrichtung 200 ab und trennt den Spannungsniveauumsetzer 40 und damit das an diesen angeschlossene Niederspannungsnetz 50 vom Mittelspannungsnetz 20.

Sobald mittels der Schalteinrichtung 200 das Niederspannungsnetz 50 vom Mittelspannungsnetz 20 abgetrennt ist, wird die Steuereinrichtung 31 den im Speicher 32 abgespeicherten Überwachungsparametersatz PS aktualisieren bzw. durch einen neuen Überwachungsparametersatz PS' ersetzen und dabei berücksichtigen, dass das Niederspannungsnetz 50 nicht mehr am Mittelspannungsnetz 20 angeschlossen ist und dieses somit nicht mehr beeinflussen kann. Die weitere Überwachung des Mittelspannungsnetzes 20 erfolgt dann lediglich hinsichtlich der weiteren Spannungsniveauumsetzer 60 und hinsichtlich der weiteren Niederspannungsnetze 70, die an das Mittelspannungsnetz 20 angeschlossen sind.

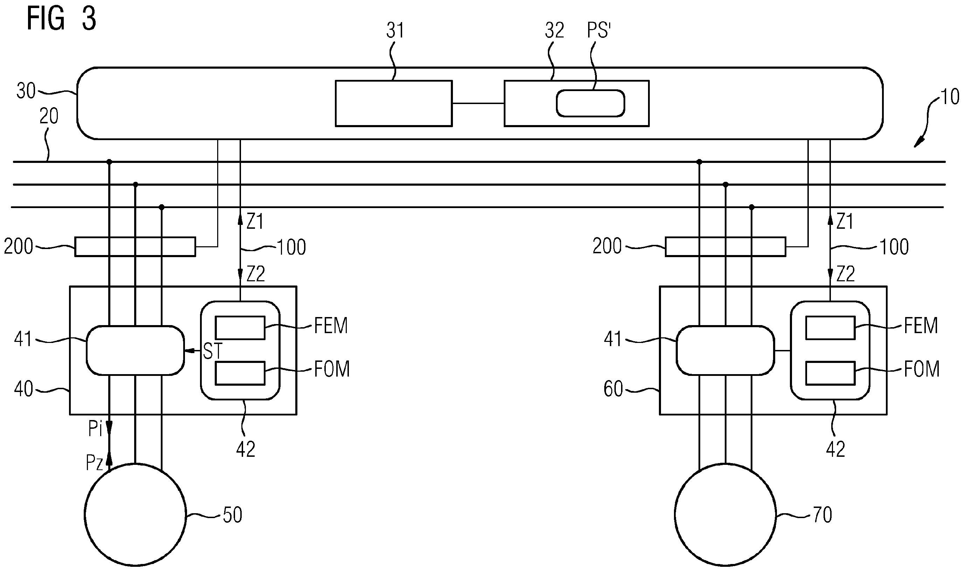

Die Figur 3 zeigt die Energieverteilanlage 10 in einem Störungsfall, bei dem im Bereich des Niederspannungsnetzes 50 ein Kurzschluss eingetreten ist. Einen solchen Kurzschluss im Niederspannungsnetz 50 wird das Fehlererkennungsmodul FEM der Steuereinrichtung 42 des Spannungsniveauumsetzers 40 erkennen. Zur Überwachung des Niederspannungsnetzes 50 steht die Steuereinrichtung 42 bzw. deren Fehlererkennungsmodul FEM mit dem Niederspannungsnetz 50 mittels aus Gründen der Übersicht in den Figuren 1 bis 3 nicht gezeigter Strom- und Spannungswandler in Verbindung.

Sobald die Steuereinrichtung 42 einen Kurzschluss im Niederspannungsnetz 50 erkannt hat, wird sie das Niederspannungsnetz 50 insgesamt oder den vom Kurzschluss betroffenen Abschnitt des Niederspannungsnetzes 50 abschalten. Ein vollständiges Abschalten des Niederspannungsnetzes 50 wird die Steuereinrichtung 42 vorzugsweise mittels des Umrichters 41 auslösen, indem sie diesen mittels Steuersignalen ST derart ansteuert, dass ein Energiefluss vom Mittelspannungsnetz 20 durch den Umrichter 41 in Richtung des Niederspannungsnetzes 50 vollständig unterbunden wird.

Sobald ein Abschalten des Niederspannungsnetzes 50 ganz oder in Abschnitten erfolgt ist, wird die Steuereinrichtung 42 das Abschalten über die Kommunikationsverbindung 100 an die Steuereinrichtung 31 des Mittelspannungsschutzgerätes 30 übermitteln. Die Steuereinrichtung 31 kann das Abschalten des Niederspannungsnetzes 50 in dem in dem Speicher 32 abgespeicherten Überwachungsparametersatz PS berücksichtigen, indem sie diesen aktualisiert; der aktualisierte Überwachungsparametersatz ist in der Figur 3 mit dem Bezugszeichen PS' gekennzeichnet.

Nach dem Feststellen eines Kurzschlusses im Bereich des Niederspannungsnetzes 50 wird die Steuereinrichtung 42 vorzugsweise das Fehlerortungsmodul FOM in Betrieb nehmen und eine Fehlerortung durchführen. Die Fehlerortung erfolgt vorzugsweise durch Steuersignale ST, die den Umrichter 41 zur Erzeugung elektrischer Impulse Pi auffordern. Der Umrichter 41 wird bei Vorliegen der entsprechenden Steuerbefehle ST die Impulse Pi erzeugen und in das Niederspannungsnetz 50 einspeisen. Die Impulse Pi werden zur Fehlerstelle gelangen und dort ganz oder zumindest zum Teil reflektiert werden. Die an der Fehlerstelle reflektierten und zum Spannungsniveauumsetzer 40 zurücklaufenden Impulse sind in der Figur 3 mit dem Bezugszeichen PZ gekennzeichnet.

Die reflektierten Impulse PZ werden von der Steuereinrichtung 42 vorzugsweise mittels der bereits erwähnten Strom- und Spannungswandler erfasst und ausgewertet. Vorzugsweise wird die Steuereinrichtung 42 anhand der Laufzeit, die die vom Umrichter 41 erzeugten Impulse Pi bis zum Fehlerort und zurück benötigen, den Fehlerort errechnen. Die Software zum Messen und zum Auswerten der Laufzeit ist vorzugsweise im Fehlerortungsmodul FOM oder an anderer Stelle in der Steuereinrichtung 42 abgespeichert.

Die weiteren Spannungsniveauumsetzer 60 können mit dem Spannungsniveauumsetzer 40 baugleich sein. Die obigen Erläuterungen zur Funktionsweise des Spannungsniveauumsetzers 40 gelten für die weiteren Spannungsniveauumsetzer 60 somit vorzugsweise entsprechend.

Im Übrigen sei erwähnt, dass die Niederspannungsnetze 50 und 70 gemäß den Figuren 1 bis 3 auch als Niederspannungsnetzabschnitte eines vom Mittelspannungsnetz 20 gespeisten gemeinsamen Niederspannungsnetzes angesehen werden können.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Energieverteilanlage
- 20: Mittelspannungsnetz
- 30: Mittelspannungsschutzgerät
- 31: Steuereinrichtung
- 32: Speicher
- 40: Spannungsniveauumsetzer
- 41: Umrichter
- 42: Steuereinrichtung
- 50: Niederspannungsnetz
- 60: Spannungsniveauumsetzer
- 70: Niederspannungsnetze
- 100: Kommunikationsverbindung
- 200: Schalteinrichtung

- FEM: Fehlererkennungsmodul
- FOM: Fehlerortungsmodul
- Pi: elektrische Impulse
- PS: Überwachungsparametersatz
- PS': Überwachungsparametersatz
- PZ: zurücklaufende Impulse
- ST: Steuersignale
- Z1: Zustandsdaten
- Z2: Zustandsdaten

## Patentansprüche

1. Elektrische Energieverteilanlage (10) mit einem dreiphasigen Mittelspannungsnetz (20) und einem dreiphasigen Niederspannungsnetz (50, 70) und zumindest einem Spannungsniveauumsetzer (40, 60) zwischen dem dreiphasigen Mittelspannungsnetz (20) und dem dreiphasigen Niederspannungsnetz (50, 70), wobei der Spannungsniveauumsetzer (40, 60) einen Umrichter (41) zur Umsetzung des Spannungsniveaus sowie eine mit dem Umrichter (41) in Verbindung stehende und diesen ansteuernde Steuereinrichtung (42) umfasst, die im Falle eines Fehlers in einem von dem Umrichter (41) gespeisten Niederspannungsnetz (50, 70) den Betrieb des Umrichters (41) insgesamt oder zumindest den Energieeinspeisebetrieb in Richtung des Niederspannungsnetzes (50, 70) ganz oder zumindest kurzzeitig abschaltet, wobei
- die Steuereinrichtung (42) bei Erkennen eines Kurzschlusses in einen Fehlerortungsmodus schaltet, in dem sie mit Hilfe des Umrichters (41) den Ort des Kurzschlusses ermitteln kann, **dadurch gekennzeichnet dass**
- die Steuereinrichtung (42) und der Fehlerortungsmodus derart ausgestaltet sind, dass
- im Fehlerortungsbetrieb die Steuereinrichtung (42) den Umrichter (41) derart ansteuert, dass dieser einen oder mehrere elektrische Impulse (Pi) erzeugt und diese in das Niederspannungsnetz (50, 70) einspeist,
- die Steuereinrichtung (42) an der Fehlerstelle reflektierte und zum Spannungsniveauumsetzer (40, 60) zurückgelaufene Impulse (Pz) erfasst und
- die Steuereinrichtung (42) anhand der zurückgelaufenen Impulse (Pz) den Fehlerort ermittelt.

2. Elektrische Energieverteilanlage (10) nach Anspruch 1,
**dadurch gekennzeichnet, dass**
die Steuereinrichtung (42) den Fehlerort anhand der Laufzeit der vom Umrichter (41) erzeugten Impulse (Pi, Pz) zum Fehlerort und zurück ermittelt.

3. Elektrische Energieverteilanlage (10) nach Anspruch 1 oder 2,
**dadurch gekennzeichnet, dass**
- mit dem Mittelspannungsnetz (20) ein Mittelspannungsschutzgerät (30) in Verbindung steht, das das Mittelspannungsnetz (20) oder zumindest einen Teil davon überwacht, und
- das Mittelspannungsschutzgerät (30) mit dem Spannungsniveauumsetzer (40, 60) über eine Kommunikationsverbindung (100) verbunden ist.

4. Elektrisches Energieverteilanlage (10) nach Anspruch 3,
**dadurch gekennzeichnet, dass**
das Mittelspannungsschutzgerät (30) derart ausgestaltet ist, dass es im Falle eines Ausfalls der Kommunikation mit dem Spannungsniveauumsetzer (40, 60) den mit dem Spannungsniveauumsetzer (40, 60) in Verbindung stehenden Mittelspannungsnetzabschnitt ausschaltet.

5. Elektrische Energieverteilanlage (10) nach einem der voranstehenden Ansprüche 3 bis 4,
**dadurch gekennzeichnet, dass**
das Mittelspannungsschutzgerät (30) derart ausgestaltet ist, dass es im Falle, dass der Spannungsniveauumsetzer (40, 60) über die Kommunikationsverbindung (100) seine Arbeitsfähigkeit signalisiert sowie außerdem die Abschaltung des von ihm gespeisten Niederspannungsnetzes (50, 70) anzeigt, für seine Überwachung des Mittelspannungsnetzes (20) oder des Teils davon seinen Überwachungsparametersatz (PS) ändert und mit einem neuen Überwachungsparametersatz (PS') berücksichtigt, dass das abgeschaltete Niederspannungsnetz (50, 70) stromfrei ist.

6. Elektrische Energieverteilanlage (10) nach einem der voranstehenden Ansprüche,
**dadurch gekennzeichnet, dass**
die Steuereinrichtung (42) im fehlerfreien Normalbetrieb den Umrichter (41) derart ansteuert, dass dieser den Phasenwinkel zwischen Strom und Spannung in dem von ihm gespeisten Niederspannungsnetz (50, 70) derart einstellt, dass eine Blindleistungskompensation erfolgt.

7. Elektrische Energieverteilanlage (10) nach einem der voranstehenden Ansprüche,
**dadurch gekennzeichnet, dass**
- der Umrichter (41) hinsichtlich der Richtung des Energieflusses bidirektional betreibbar ist und
- die Steuereinrichtung (42) im fehlerfreien Normalbetrieb den Umrichter (41) derart ansteuern kann, dass eine Energierückspeisung seitens des Niederspannungsnetzes (50, 70) in Richtung des Mittelspannungsnetzes (20) erfolgen kann.

8. Spannungsniveauumsetzer (40, 60) zum Einsatz zwischen einem dreiphasigen Mittelspannungsnetz (20) und einem dreiphasigen Niederspannungsnetz (50, 70) einer elektrischen Energieverteilanlage (10), wobei
- der Spannungsniveauumsetzer (40, 60) einen Umrichter (41) zur Umsetzung des Spannungsniveaus sowie eine mit dem Umrichter (41) in Verbindung stellende und diesen ansteuernde Steuereinrichtung (42) umfasst,
- wobei die Steuereinrichtung (42) derart ausgestaltet ist, dass sie im Falle eines Fehlers in dem von dem Umrichter (41) gespeisten Niederspannungsnetz (50, 70) den Betrieb des Umrichters (41) insgesamt oder zumindest den Energieeinspeisebetrieb in Richtung des Niederspannungsnetzes (50, 70) ganz oder zumindest kurzzeitig abschaltet,
- **dadurch gekennzeichnet dass** die Steuereinrichtung (42) bei Erkennen eines Kurzschlusses in einen Fehlerortungsmodus schaltet, in dem sie mit Hilfe des Umrichters (41) den Ort des Kurzschlusses ermitteln kann, und
- wobei die Steuereinrichtung (42) und der Fehlerortungsmodus derart ausgestaltet sind, dass
- im Fehlerortungsbetrieb die Steuereinrichtung (42) den Umrichter (41) derart ansteuert, dass dieser einen oder mehrere elektrische Impulse (Pi) erzeugt und diese in das Niederspannungsnetz (50, 70) einspeist,
- die Steuereinrichtung (42) an der Fehlerstelle reflektierte und zum Spannungsniveauumsetzer (40, 60) zurückgelaufene Impulse (Pz) erfasst und
- die Steuereinrichtung (42) anhand der zurückgelaufenen Impulse (Pz) den Fehlerort ermittelt.

9. Verfahren zum Betreiben einer elektrischen Energieverteilanlage (10), die ein dreiphasiges Mittelspannungsnetz (20) und ein dreiphasiges Niederspannungsnetz (50, 70) umfasst, wobei
- eine Spannungsniveauumsetzung zwischen dem Mittelspannungsnetz (20) und dem Niederspannungsnetz (50, 70) mittels eines Umrichters (41) erfolgt und
- im Falle eines Fehlers in dem von dem Umrichter (41) gespeisten Niederspannungsnetz (50, 70) der Betrieb des Umrichters (41) oder zumindest die Energieeinspeisung in Richtung des Niederspannungsnetzes (50, 70) ganz oder zumindest kurzzeitig abgeschaltet wird, **dadurch gekennzeichnet dass** im Falle eines Fehlers eine Fehlerortung durchgeführt wird, indem
- der Umrichter (41) derart angesteuert wird, dass dieser einen oder mehrere elektrische Impulse (Pi) erzeugt und diese in das Niederspannungsnetz (50, 70) einspeist,
- an der Fehlerstelle reflektierte und zum Spannungsniveauumsetzer (40, 60) zurückgelaufene Impulse (Pz) erfasst werden und
- anhand der zurückgelaufenen Impulse (Pz) der Fehlerort ermittelt wird.

## Claims

1. Electrical energy distribution system (10) having a three-phase medium-voltage network (20) and a three-phase low-voltage network (50, 70) and at least one voltage level converter (40, 60) between the three-phase medium-voltage network (20) and the three-phase low-voltage network (50, 70), wherein the voltage level converter (40, 60) comprises a converter element (41) for converting the voltage level and a control device (42), which is connected to the converter element (41) and actuates same, which control device, in the case of a fault in a low-voltage network (50, 70) fed by the converter element (41), turns off the operation of the converter element (41) overall or turns off at least the energy infeed operation in the direction of the low-voltage network (50, 70) completely or at least temporarily, wherein
- upon identification of a short circuit, the control device (42) switches to a fault location mode in which it can determine the location of the short circuit with the aid of the converter element (41), **characterized in that**
- the control device (42) and the fault location mode are designed in such a way that
- during fault location operation, the control device (42) actuates the converter element (41) in such a way that it generates one or more electrical pulses (Pi) and feeds said pulses into the low-voltage network (50, 70),
- the control device (42) detects pulses (Pz) reflected at the fault point and returned to the voltage level converter (40, 60) and
- the control device (42) determines the fault location based on the returned pulses (Pz).

2. Electrical energy distribution system (10) according to Claim 1,
**characterized in that**
the control device (42) determines the fault location based on the propagation time of the pulses (Pi, Pz) generated by the converter element (41) to the fault location and back.

3. Electrical energy distribution system (10) according to Claim 1 or 2,
**characterized in that**
- a medium-voltage protective device (30) is connected to the medium-voltage network (20), said medium-voltage protective device monitoring the medium-voltage network (20) or at least a part thereof, and
- the medium-voltage protective device (30) is connected to the voltage level converter (40, 60) by means of a communication connection (100).

4. Electrical energy distribution system (10) according to Claim 3,
**characterized in that**
the medium-voltage protective device (30) is designed in such a way that, in the event of a failure of the communication with the voltage level converter (40, 60), said medium-voltage protective device switches off the medium-voltage network section connected to the voltage level converter (40, 60).

5. Electrical energy distribution system (10) according to one of the preceding Claims 3 to 4,
**characterized in that**
the medium-voltage protective device (30) is designed in such a way that, in the event that the voltage level converter (40, 60) signals its working capacity by means of the communication connection (100) and furthermore indicates the turn-off of the low-voltage network (50, 70) fed thereby, said medium-voltage protective device changes its monitoring parameter set (PS) for its monitoring of the medium-voltage network (20) or the part thereof and using a new monitoring parameter set (PS') takes into account the fact that the turned-off low-voltage network (50, 70) is free of current.

6. Electrical energy distribution system (10) according to one of the preceding claims,
**characterized in that**
the control device (42) actuates the converter element (41) in the fault-free normal operation in such a way that said converter element sets the phase angle between current and voltage in the low-voltage network (50, 70) fed thereby in such a way that a reactive power compensation takes place.

7. Electrical energy distribution system (10) according to one of the preceding claims,
**characterized in that**
- the converter element (41) can be operated in a bidirectional manner with respect to the direction of the flow of energy and
- the control device (42) can actuate the converter element (41) in the fault-free normal operation in such a way that energy can be fed back by the low-voltage network (50, 70) in the direction of the medium-voltage network (20).

8. Voltage level converter (40, 60) for use between a three-phase medium-voltage network (20) and a three-phase low-voltage network (50, 70) of an electrical energy distribution system (10), wherein
- the voltage level converter (40, 60) comprises a converter element (41) for converting the voltage level and a control device (42), which is connected to the converter element (41) and actuates same,
- wherein the control device (42) is designed in such a way that, in the case of a fault in the low-voltage network (50, 70) fed by the converter element (41), turns off the operation of the converter element (41) overall or turns off at least the energy infeed operation in the direction of the low-voltage network (50, 70) completely or at least temporarily, **characterized in that**
- upon identification of a short circuit, the control device (42) switches to a fault location mode in which it can determine the location of the short circuit with the aid of the converter element (41), and
- wherein the control device (42) and the fault location mode are designed in such a way that
- during fault location operation, the control device (42) actuates the converter element (41) in such a way that it generates one or more electrical pulses (Pi) and feeds said pulses into the low-voltage network (50, 70),
- the control device (42) detects pulses (Pz) reflected at the fault point and returned to the voltage level converter (40, 60) and
- the control device (42) determines the fault location based on the returned pulses (Pz).

9. Method for operating an electrical energy distribution system (10), which comprises a three-phase medium-voltage network (20) and a three-phase low-voltage network (50, 70), wherein
- a voltage level conversion between the medium-voltage network (20) and the low-voltage network (50, 70,) takes place by means of a converter element (41) and
- in the case of a fault in the low-voltage network (50, 70) fed by the converter element (41), the operation of the converter element (41) or at least the energy infeed in the direction of the low-voltage network (50, 70) is completely or at least temporarily turned off, **characterized in that**, in the event of a fault, a fault location process is carried out by virtue of
- the converter element (41) being actuated in such a way that it generates one or more electrical pulses (Pi) and feeds said pulses into the low-voltage network (50, 70),
- pulses (Pz) reflected at the fault point and returned to the voltage level converter (40, 60) being detected and
- the fault location being determined based on the returned pulses (Pz).

## Revendications

1. Installation (10) de distribution d'énergie électrique, comprenant un réseau (20) triphasé de moyenne tension et un réseau (50, 70) triphasé de basse tension et au moins un convertisseur (40, 60) de niveau de tension, entre le réseau (20) triphasé de moyenne tension et le réseau (50, 70) triphasé de basse tension,
dans laquelle
le convertisseur (40, 60) de niveau de tension comprend un convertisseur (41) pour convertir le niveau de tension, ainsi qu'un dispositif (42) de commande, qui est en liaison avec le convertisseur (41), qui le commande et qui, s'il se produit un défaut dans un réseau (50, 70) de basse tension alimenté par le convertisseur (41), interrompt complètement, ou au moins brièvement, le fonctionnement du convertisseur (41) dans son ensemble ou au moins le fonctionnement d'injection d'énergie en direction du réseau (50, 70) de basse tension,
dans laquelle
- le dispositif (42) de commande met, à la détection d'un court-circuit, dans un mode de localisation de défaut, dans lequel il peut, à l'aide du convertisseur (41), déterminer l'emplacement du court-circuit,
**caractérisée en ce que**
- le dispositif (42) de commande et le mode de localisation du défaut, sont conformés de manière
- à ce que, dans le fonctionnement de localisation du défaut, le dispositif (42) de commande commande le convertisseur (41), de manière à ce que celui-ci produise une ou plusieurs impulsions (Pi) électriques et l'injecte ou les injecte dans le réseau (50, 70) de basse tension,
- à ce que le dispositif (42) de commande détecte des impulsions (Pz) réfléchies au point de défaut et retournées au convertisseur (40, 60) de niveau de tension et
- à ce que le dispositif (42) de commande détermine l'emplacement du défaut à l'aide des impulsions (Pz) retournées.

2. Installation (10) de distribution d'énergie électrique suivant la revendication 1,
**caractérisée en ce que**
le dispositif (42) de commande détermine l'emplacement du défaut à l'aide du temps de parcours des impulsions (Pi, Pz) produites par le convertisseur (41), pour aller au défaut et en revenir.

3. Installation (10) de distribution d'énergie électrique suivant la revendication 1 ou 2,
**caractérisée en ce que**
- est en liaison avec le réseau (20) de moyenne tension un appareil (30) de protection de moyenne tension, qui contrôle le réseau (20) de moyenne tension, ou au moins une partie de celui-ci, et
- l'appareil (30) de protection de moyenne tension est relié au convertisseur (40, 60) de niveau de tension, par une liaison (100) de communication.

4. Installation (10) de distribution d'énergie électrique suivant la revendication 3,
**caractérisée en ce que**
l'appareil (30) de protection de moyenne tension est conformé de manière à déconnecter, s'il se produit une défaillance de la communication avec le convertisseur (40, 60) de niveau de tension, la partie du réseau de moyenne tension en liaison avec le convertisseur (40, 60) de niveau de tension.

5. Installation (10) de distribution d'énergie électrique suivant l'une des revendications précédentes 3 à 4,
**caractérisée en ce que**
l'appareil (30) de protection de moyenne tension est conformé de manière, dans le cas où le convertisseur (40, 60) de niveau de tension signale son aptitude à fonctionner par l'intermédiaire de la liaison (100) de communication, ainsi qu'indique, en outre, la mise en circuit du réseau (50, 70) de basse tension qu'il alimente, à modifier pour son contrôle du réseau (20) de moyenne tension ou de la partie de celui-ci, son jeu (PS) de paramètres de contrôle et à prendre en compte un nouveau jeu (PS') de paramètres de contrôle et de manière à ce que le réseau (50, 70) de basse tension mis hors circuit soit sans courant.

6. Installation (10) de distribution d'énergie électrique suivant l'une des revendications précédentes,
**caractérisée en ce que**
le dispositif (42) de commande commande, en fonctionnement normal, sans défaut, le convertisseur (41), de manière à ce que celui-ci règle l'angle de phase entre le courant et la tension dans le réseau (50, 70) de basse tension qu'il alimente, de façon à effectuer une compensation de la puissance réactive.

7. Installation (10) de distribution d'énergie électrique suivant l'une des revendications précédentes,
**caractérisée en ce que**
- le convertisseur (41) peut fonctionner bidirectionnellement du point de vue du sens du flux d'énergie et
- le dispositif (42) de commande peut, en fonctionnement normal, sans défaut, commander le convertisseur (41), de manière à pouvoir effectuer une alimentation en énergie en retour de la part du réseau (50, 70) de basse tension, en direction du réseau (20) de moyenne tension.

8. Convertisseur (40, 60) de niveau de tension, à utiliser entre un réseau (20) triphasé de moyenne tension et un réseau (50, 70) triphasé de basse tension d'une installation (10) de distribution d'énergie électrique,
dans lequel
- le convertisseur (40, 60) de niveau de tension comprend un convertisseur (41) de conversion du niveau de tension, ainsi qu'un dispositif (42) de commande en liaison avec le convertisseur (41) et le commandant,
- dans lequel le dispositif (42) de commande est conformé de manière à mettre hors circuit complètement, ou au moins brièvement, dans le cas d'un défaut, dans le réseau (50, 70) de basse tension alimenté par le convertisseur (41), le fonctionnement du convertisseur (41) dans son ensemble ou au moins le fonctionnement d'alimentation en énergie, en direction du réseau (50, 70) de basse tension,
- **caractérisé en ce que** le dispositif (42) de commande peut, à la détection d'un court-circuit, se mettre dans un mode de localisation de défaut, dans lequel il peut déterminer l'emplacement du court-circuit, à l'aide du convertisseur (41) et
- dans lequel le dispositif (42) de commande et le mode de localisation de défaut sont conformés de manière à ce que
- en fonctionnement de localisation d'un défaut le dispositif (42) de commande commande le convertisseur (41) de manière à ce que celui-ci produise plusieurs impulsions (Pi) électriques et les injecte dans le réseau (50, 70) de basse tension,
- le dispositif (42) de commande détecte des impulsions (Pz) réfléchies au point de défaut et retournées au convertisseur (40, 60) de niveau de tension et
- le dispositif (42) de commande détermine l'emplacement du défaut à l'aide des impulsions (Pz) retournées.

9. Procédé pour faire fonctionner une installation (10) de distribution d'énergie électrique, qui comprend un réseau (20) triphasé de moyenne tension et un réseau (50, 70) triphasé de basse tension,
dans lequel
- une conversion de niveau de tension entre le réseau (20) de moyenne tension et le réseau (50, 70) de basse tension s'effectue au moyen d'un convertisseur (41) et
- dans le cas d'un défaut dans le réseau (50, 70) de basse tension alimenté par le convertisseur (41), on interrompt, complètement ou au moins brièvement, le fonctionnement du convertisseur (41) ou au moins l'alimentation en énergie en direction du réseau (50, 70) de basse tension, **caractérisé en ce que**, dans le cas d'un défaut, on effectue une localisation du défaut en
- commandant le convertisseur (41), de manière à ce que celui-ci produise une ou plusieurs impulsions (Pi) électriques et les injecte dans le réseau (50, 70) de basse tension,
- on détecte des impulsions (Pz) réfléchies au point du défaut et retournées au convertisseur (40, 60) de niveau de tension et
- on détermine l'emplacement du défaut à l'aide des impulsions (Pz) retournées.
